(19) Europäisches Patentamt
European Patent Office
Office européen des brevets

(11) EP 4 166 354 A1

(12) **EUROPEAN PATENT APPLICATION**
published in accordance with Art. 153(4) EPC

(43) Date of publication:
**19.04.2023 Bulletin 2023/16**

(21) Application number: **21826836.5**

(22) Date of filing: **11.05.2021**

(51) International Patent Classification (IPC):
***B60C 11/00*** *(2006.01)* ***B60C 1/00*** *(2006.01)*
***C08L 15/00*** *(2006.01)*

(52) Cooperative Patent Classification (CPC):
**B60C 1/00; B60C 11/00; C08L 15/00**

(86) International application number:
**PCT/JP2021/017908**

(87) International publication number:
**WO 2021/256123 (23.12.2021 Gazette 2021/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.06.2020 JP 2020103283**

(71) Applicant: **Sumitomo Rubber Industries, Ltd.**
**Kobe-shi, Hyogo 651-0072 (JP)**

(72) Inventor: **TANAKA, Tatsuhiro**
**Kobe-shi, Hyogo 651-0072 (JP)**

(74) Representative: **TBK**
**Bavariaring 4-6**
**80336 München (DE)**

(54) **TIRE**

(57) An object of the invention is to provide a tire that makes it possible to achieve an improvement in fuel efficiency while maintaining wet grip performance even after wear. The tire has a tread part with three or more rubber layers and imparting at least a predetermined level of gradient in concentration of a plasticizer toward a rubber layer on the inner side in the tire radial direction from a rubber layer on the outer side in the tire radial direction.

FIG. 1

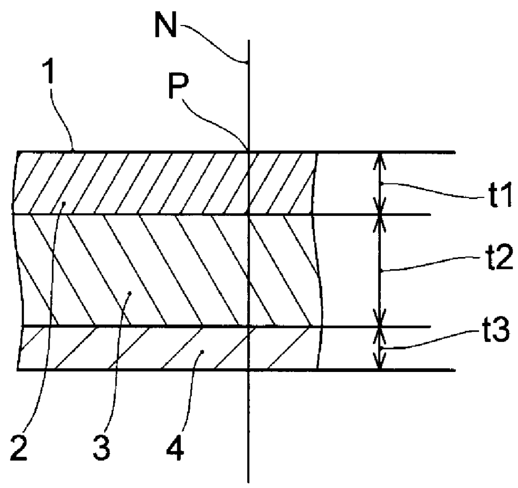


EP 4 166 354 A1

## Description

TECHNICAL FIELD

The invention relates to a tire.

BACKGROUND ART

Patent document 1 discloses a pneumatic tire comprising a tread rubber comprising a tread surface rubber layer located on an uppermost surface of a tread and a tread inner rubber layer being located on the inner side of the tread surface rubber layer in the tire radial direction. In such a tire, the tread surface rubber layer is made to be a rubber layer having a relatively high rigidity, while the tread inner rubber layer is made to be a rubber layer having a relatively low rigidity. In this way, the tread surface rubber layer causes the rigidity of a land part of the tire surface in the tire peripheral direction to improve, for example, causing abrasion resistance to improve, and, moreover, the tread inner-side rubber layer suppresses the hysteresis loss, for example, causing fuel efficiency of the tire to improve.

PRIOR ART DOCUMENT

Patent Document

Patent Document 1: JP 2014-162242 A

SUMMARY OF THE INVENTION

PROBLEM TO BE SOLVED BY THE INVENTION

However, with a tire such as described above, when the tread surface rubber layer is worn to cause the low heat-dissipating tread inner rubber layer to be exposed, wet grip performance could decrease drastically.
An object of the invention is to provide a tire that makes it possible to achieve an improvement in fuel efficiency while maintaining wet grip performance even after wear.

MEANS TO SOLVE THE PROBLEM

As a result of intensive studies, the inventor has found that the previously-described problem could be solved by providing a tread part with three or more rubber layers and imparting at least a predetermined level of gradient in concentration of a plasticizer toward a rubber layer on the inner side in the tire radial direction from a rubber layer on the outer side in the tire radial direction, and completed the invention.
In other words, the invention relates to

[1] A tire having a tread at least comprising a first layer constituting a tread surface, a second layer being arranged adjacent on the inner side of the first layer in the radial direction, and a third layer being arranged adjacent on the inner side of the second layer in the radial direction, wherein the first layer, the second layer, and the third layer are composed of a rubber composition comprising a rubber component and a plasticizer, wherein a difference ($AE_1$-$AE_2$) between an acetone extraction amount $AE_1$ of the rubber composition constituting the first layer and an acetone extraction amount $AE_2$ of the rubber composition constituting the second rubber layer is 1.0% by mass or more, and wherein a difference ($AE_2$-$AE_3$) between an acetone extraction amount $AE_2$ of the rubber composition constituting the second layer and an acetone extraction amount $AE_3$ of the rubber composition constituting the third layer is 1.0% by mass or more.
[2] The tire of [1] above, wherein $AE_1$-$AE_2$ is 2.0% by mass or more.
[3] The tire of [1] or [2] above, wherein $AE_2$-$AE_3$ is 2.0% by mass or more.
[4] The tire of any one of [1] to [3] above, wherein tan $\delta$ at 0°C of the rubber composition constituting the first layer is 1.00 or more.
[5] The tire of any one of [1] to [4] above, wherein elongation at break measured according to JIS K 6251 of the rubber composition constituting the first layer is 610% or more.
[6] The tire of any one of [1] to [5] above, wherein complex modulus at 0°C (0°C E*) of the rubber composition constituting the first layer is 50 MPa or more.
[7] The tire of any one of [1] to [6] above, wherein the glass transition temperature of the rubber composition constituting the first layer is -10°C or higher.

[8] The tire of any one of [1] to [7] above, wherein the glass transition temperature of the rubber composition constituting the first layer is -7°C or higher.

[9] The tire of any one of [1] to [8] above, wherein tan δ at 30°C of the rubber composition constituting the first layer is 0.25 or more.

[10] The tire of any one of [1] to [9] above, wherein tan δ at 30°C of the rubber composition constituting the first layer is 0.30 or more.

[11] The tire of any one of [1] to [10] above, wherein tan δ at 0°C of the rubber composition constituting the second layer is 0.60 or more.

[12] The tire of any one of [1] to [11] above, wherein elongation at break measured according to JIS K 6251 of the rubber composition constituting the second layer is 500% or more.

[13] The tire of any one of [1] to [12] above, wherein complex modulus at 0°C (0°C E*) of the rubber composition constituting the second layer is 25 MPa or more.

[14] The tire of any one of [1] to [13] above, wherein each of the rubber compositions constituting the first layer and the second layer comprise 40 to 160 parts by mass of silica and carbon black in total, based on 100 parts by mass of the rubber component, and a proportion of a content of silica with respect to a total content of silica and carbon black is 60% by mass or more.

[15] The tire of any one of [1] to [14] above, wherein the rubber composition constituting the first layer comprises 100 parts by mass or more of silica based on 100 parts by mass of the rubber component.

[16] The tire of any one of [1] to [15] above, wherein each of the rubber compositions constituting the first layer and the second layer comprise 10 parts by mass or more of a plasticizer based on 100 parts by mass of the rubber component.

[17] The tire of any one of [1] to [16] above, wherein each of the rubber component constituting the first layer and the second layer comprises 50% by mass of a styrene-butadiene rubber.

[18] The tire of any one of [1] to [17] above, wherein a tire inner cavity is provided with at least one selected from the group consisting of a sealant, a noise-damping body, and an electronic component for tire monitoring.

## EFFECTS OF THE INVENTION

According to the invention, a tire that makes it possible to achieve an improvement in fuel efficiency while maintaining wet grip performance even after wear is provided.

## BRIEF DESCRIPTION OF THE DRAWINGS

FIG. 1 is an enlarged cross-sectional view showing a part of a tread of a tire according to one embodiment of the disclosure.

## EMBODIMENT FOR CARRYING OUT THE INVENTION

A tire being one embodiment of the disclosure is a tire having a tread at least comprising a first layer constituting a tread surface, a second layer being arranged adjacent on the inner side of the first layer in the radial direction, and a third layer being arranged adjacent on the inner side of the second layer in the radial direction, wherein the first layer, the second layer, and the third layer are composed of a rubber composition comprising a rubber component and a plasticizer, wherein a difference ($AE_1$-$AE_2$) between an acetone extraction amount $AE_1$ of the rubber composition constituting the first layer and an acetone extraction amount $AE_2$ of the rubber composition constituting the second rubber layer is 1.0% by mass or more (preferably 2.0% by mass or more), and wherein a difference ($AE_2$-$AE_3$) between an acetone extraction amount $AE_2$ of the rubber composition constituting the second layer and an acetone extraction amount $AE_3$ of the rubber composition constituting the third layer is 1.0% by mass or more (preferably 2.0% by mass or more).

In the tire of the disclosure, arranging the second layer being adjacent on the inner side of the first layer in the radial direction, which first layer constitutes the tread surface, and being lower in heat dissipation than the first layer, makes it possible to achieve an improvement in fuel efficiency while maintaining wet grip performance.

It is considered that, in the tire of the disclosure, imparting at least a predetermined level of gradient in concentration of a plasticizer toward a rubber layer on the inner side in the tire radial direction from a rubber layer on the outer side in the tire radial direction allows promoting a transfer of the plasticizer from the rubber layer on the outer side in the tire radial direction to the rubber layer on the inner side in the tire radial direction as a result of stimulus during traveling, and wet grip performance can be secured even when the second layer is exposed due to wear, so that wet grip performance can be sustained over a long time period.

A procedure of producing the tire being one embodiment of the disclosure will be described in detail below. Note the following description is illustrative for explaining the invention and is not intended to limit the technical scope

of the invention only to this description range. Besides, in the specification, a numerical range shown using the recitation "to" is to include the numerical values at both ends thereof.

FIG. 1 is an enlarged cross-sectional view showing a part of a tread of a tire according to the disclosure. In FIG. 1, a portion on a tread surface of the tread according to the disclosure, in which portion no grooves are formed, is shown in an enlarged manner. In FIG. 2, the up-down direction is the tire radial direction, the left-right direction is the tire axial direction, and the direction being perpendicular to the paper surface is the tire circumferential direction.

As shown, a tread part of the tire of the disclosure comprises a first layer 2, a second layer 3, and a third layer 4, an outer surface of the first layer 2 constitutes a tread surface 1, the second layer 3 is arranged adjacent on the inner side of the first layer 2 in the radial direction, and the third layer 4 is arranged adjacent on the inner side of the second layer 3 in the radial direction. The first layer 2 typically corresponds to a cap tread. The second layer 3 and the third layer 4 typically correspond to a base tread or an under tread. Moreover, as long as the object of the invention is realized, it can further have one or a plurality of rubber layers between the third layer 4 and a belt layer.

In FIG. 1, a two-way arrow t1 is the thickness of the first layer 2, a two-way arrow t2 is the thickness of the second layer 3, and a two-way arrow t3 is the thickness of the third layer 4. In FIG. 1, an arbitrary point on a tread surface, at which point no grooves are formed, is shown as a symbol P. A straight line shown with a symbol N passes through a point P and is a straight perpendicular line (a normal line) with respect to a contact plane of this point P. In the specification, thicknesses t1, t2, and t3 are measured along a normal line N being drawn from the point P on the tread surface, at which point P no grooves are present, in a cross section of FIG. 1.

In the disclosure, the thickness t1 of the first layer 2 is not particularly limited, but, from the viewpoint of wet grip performance, it is preferably 1.0 mm or more, more preferably 1.5 mm or more, and further preferably 2.0 mm or more. On the other hand, from the viewpoint of heat generation, the thickness t1 of the first layer 2 is preferably 10.0 mm or less, more preferably 9.0 mm or less, and further preferably 8.0 mm or less.

In the disclosure, the thickness t2 of the second layer 3 is not particularly limited, but it is preferably 1.5 mm or more, more preferably 2.0 mm or more, and further preferably 2.5 mm or more. Moreover, the thickness t2 of the second layer 3 is preferably 10.0 mm or less, more preferably 9.0 mm or less, and further preferably 8.0 mm or less.

In the disclosure, the thickness t3 of the third layer 4 is not particularly limited, but it is preferably 1.0 mm or more, and more preferably 1.5 mm or more. Moreover, the thickness t3 of the third layer 4 is preferably 10.0 mm or less, more preferably 9.0 mm or less, and further preferably 8.0 mm or less.

A ratio (t2/t1) of the thickness t2 of the second layer 3 with respect to the thickness t1 of the first layer 2 is preferably 0.4 or more, more preferably 0.5 or more, further preferably 0.7 or more, and particularly preferably 0.9 or more, from the viewpoint of fuel efficiency. On the other hand, from the viewpoint of wet grip performance, it is preferably 5.0 or less, more preferably 4.5 or less, further preferably 4.0 or less, and particularly preferably 3.5 or less.

A ratio (t3/t2) of the thickness t3 of the third layer 4 with respect to the thickness t2 of the second layer 3 is preferably 0.2 or more, more preferably 0.3 or more, and further preferably 0.4 or more, from the viewpoint of better exhibiting the effect of the disclosure. On the other hand, the ratio (t3/t2) of the thickness t3 of the third layer 4 with respect to the thickness t2 of the second layer 3 is, from the viewpoint of better exhibiting the effect of the disclosure, preferably 3.0 or less, more preferably 2.0 or less, further preferably 1.5 or less, and particularly preferably 0.9 or less.

With the tire of the disclosure, a tire inner cavity may be provided with a sealant, a noise-damping body, an electronic component for tire monitoring, and the like.

As sealants, those generally used for a tire inner circumferential surface of the tread part for puncture prevention may be suitably used. Specific examples of a sealant layer as such include what is disclosed in JP 2020-023152 A, for example. Normally, the thickness of the sealant is preferably 1 to 10 mm. Normally, the width of the sealant is preferably 85 to 115% and is preferably 95 to 105% of the maximum width of the belt layer.

Any one of noise damping bodies may be suitably used as long as it can exhibit a noise-damping effect in the tire inner cavity. Specific examples of a noise-damping body as such include what is disclosed in JP 2019-142503 A, for example. The noise-damping body is composed of a porous sponge material, for example. The sponge material is a cavernous porous structural body, and includes a web-shaped body, which web-shaped body is an animal fiber, a vegetable fiber, or a synthetic fiber and the like being intertwined and integrally coupled, in addition to a so-called sponge itself having interconnected cells in which a rubber or a synthetic resin is foamed, for example. Moreover, the "porous structural body" includes a body having, not only interconnected cells, but also closed cells. Examples of the noise-damping body include a sponge material having interconnected cells made of polyurethane. As the sponge material, for example, synthetic resin sponges such as an ether-based polyurethane sponge, an ester-based polyurethane sponge, a polyethylene sponge, and rubber sponges such as a chloroprene rubber sponge (CR sponge), an ethylene-propylene rubber sponge (EDPM sponge), a nitrile rubber sponge (NBR sponge), and the like can be suitably used, and, in particular, a polyurethane-based sponge including an ether-based polyurethane sponge, or polyethylene-based sponge is preferable from the viewpoints of noise damping property, lightweight property, controllability of foaming, durability, and the like.

The noise-damping body has an elongated belt-like shape having a bottom surface fixed to the inner cavity surface of the tread part and extends in the tire circumferential direction. At this time, outer ends thereof in the circumferential direction may be made to be in contact with each other to form a substantially annular shape, or the outer ends thereof may be spaced apart in the circumferential direction.

"0°C tan δ" in the disclosure refers to loss tangent tan δ under conditions of temperature 0°C, frequency 10 Hz, and elongation strain 2.5%. 0°C tan δ of the rubber composition constituting the first layer 2 is preferably 1.00 or more, more preferably 1.05 or more, further preferably 1.10 or more, and particularly preferably 1.15 or more, from the viewpoint of wet grip performance. Moreover, 0°C tan δ of the rubber composition constituting the second layer 3 is preferably 0.60 or more, more preferably 0.64 or more, and further preferably 0.68 or more. On the other hand, 0°C tan δ of the rubber compositions constituting the first layer 2, the second layer 3, and the third layer 4 is preferably 1.60 or less, more preferably 1.55 or less, and further preferably 1.50 or less, from the viewpoint of fuel efficiency. Besides, the value of 0°C tan δ of the rubber composition constituting the first layer 2 is preferably greater than the value of 0°C tan δ of the rubber composition constituting the second layer 3. The difference between 0°C tan δ of the rubber composition constituting the first layer 2 and 0°C tan δ of the rubber composition constituting the second layer 3 is preferably 0.10 or more, more preferably 0.20 or more, further preferably 0.30 or more, and particularly preferably 0.40 or more.

"30°C tan δ" in the disclosure refers to loss tangent tan δ under conditions of temperature 30°C, frequency 10 Hz, and elongation strain 2.5%. 30°C tan δ of the rubber composition constituting the first layer 2 is preferably 0.25 or more, more preferably 0.28 or more, further preferably 0.29 or more, further preferably 0.30 or more, further preferably 0.31 or more, further preferably 0.32 or more, and particularly preferably 0.33 or more, from the viewpoint of wet grip performance. Moreover, 30°C tan δ of the rubber composition constituting the second layer 3 is preferably 0.15 or more, more preferably 0.17 or more, further preferably 0.19 or more, and particularly preferably 0.21 or more. On the other hand, 30°C tan δ of the rubber compositions constituting the first layer 2, the second layer 3, and the third layer 4 is preferably 0.65 or less, more preferably 0.60 or less, further preferably 0.55 or more, further preferably 0.50 or more, and particularly preferably 0.45 or more, from the viewpoint of fuel efficiency. Besides, the value of 30°C tan δ of the rubber composition constituting the first layer 2 is preferably greater than the value of 30°C tan δ of the rubber composition constituting the second layer 3. The difference between 30°C tan δ of the rubber composition constituting the first layer 2 and 30°C tan δ of the rubber composition constituting the second layer 3 is preferably 0.02 or more, more preferably 0.04 or more, further preferably 0.06 or more, and particularly preferably 0.08 or more.

EB in the disclosure refers to elongation at break (elongation at rupture) measured at conditions of atmospheric temperature 23°C and tensile speed 3.3 mm/second according to Japanese Industrial Standard JIS K 6251. EB of the rubber composition constituting the first layer 2 is, from the viewpoint of maintaining smoothness of the surface, preferably 610% or more, more preferably 620% or more, further preferably 630% or more, and particularly preferably 640% or more. Moreover, EB of the rubber composition constituting the second layer 3 is preferably 500% or more, more preferably 510% or more, further preferably 520% or more, and particularly preferably 530% or more. It is considered that making EB to be within the previously-described range allows the state of the surface at the time the tire is worn to be maintained in a smoother state, causing a decrease in actual ground contact area to be suppressed and consequently making it possible to suppress a decrease in wet grip performance after the tire is worn. Besides, an upper limit of EB of the rubber compositions constituting the first layer 2, the second layer 3, and the third layer 4 is not particularly limited.

"0°C E*" in the disclosure refers to complex modulus E* under conditions of temperature 0°C, frequency 10 Hz, and elongation strain 2.5%. 0°C E* of the rubber composition constituting the first layer 2 is, from the viewpoint of anchor friction, preferably 50 MPa or more, more preferably 55 MPa or more, and further preferably 60 MPa or more. Moreover, 0°C E* of the rubber composition constituting the second layer 3 is, from the viewpoint of anchor friction, preferably 25 MPa or more, more preferably 30 MPa or more, and further preferably 35 MPa or more. On the other hand, 0°C E* of the rubber compositions constituting the first layer 2, the second layer 3, and the third layer 4 is, from the viewpoint of road surface followability, preferably 85 MPa or less, more preferably 80 MPa or less, and further preferably 75 MPa or less. Besides, the value of 0°C E* of the rubber composition constituting the first layer 2 is preferably greater than the value of 0°C E* of the rubber composition constituting the second layer 3. The difference between 0°C E* of the rubber composition constituting the first layer 2 and 0°C E* of the rubber composition constituting the second layer 3 is preferably 5 MPa or more, more preferably 8 MPa or more, and further preferably 12 MPa or more, It is considered that 0°C E* being made to be within the previously-described range allows the balance of road surface followability and anchor friction to improve, making it possible to suppress a decrease in wet grip performance after the tire is worn.

The glass transition temperature (Tg) in the disclosure refers to the **tan δ peak temperature measured using the following method**. In other words, for each of rubber test pieces (for example, length 20 mm × width 4 mm × thickness 1 mm) produced by cutting out from the rubber layer interior of the tread part of each of test tires such that the tire circumferential direction is a long side, using a dynamic viscoelasticity evaluation apparatus (EPLEXOR series manufactured by GABO Qualimeter Testanlagen GmbH), the temperature distribution curve of tan δ **was measured under conditions of frequency 10 Hz and elongation strain 2.5%, and the temperature (tan δ peak temperature) corresponding to the greatest tan δ value in the obtained** temperature distribution curve was set to be the glass transition temperature (Tg) in the disclosure. The Tg of the rubber composition constituting the first layer 2 is, from the viewpoint of wet grip performance, preferably -10°C or higher, more preferably -8°C or higher, further preferably -7°C

or higher, further preferably -6°C or higher, further preferably -5°C or higher, and particularly preferably -4°C or higher. Setting Tg to be -10°C or higher causes **a tendency that loss tangent tan $\delta$ in the region of temperature being higher** than Tg is higher than a case of setting Tg to be lower than -10°C. Moreover, the Tg of the rubber composition constituting the second layer 3 is preferably -25°C or higher, more preferably -22°C or higher, and further preferably -19°C or higher. Besides, an upper limit of the Tg of the rubber compositions constituting the first layer 2, the second layer 3, and the third layer 4 is not particularly limited, and the Tg thereof is preferably 20°C or lower, more preferably 15°C or lower, further preferably 10°C or lower, further preferably 5°C or lower, and particularly preferably 0°C or lower. Besides, the Tg of each of the rubber layers can be appropriately adjusted in accordance with the type and compounding amount of the previously-described rubber component, and the like.

With the rubber composition constituting the first layer 2, **preferably 30°C tan $\delta$ is 0.25 to 0.65 and the Tg is** -10°C to 20°C; more **preferably 30°C tan $\delta$ is 0.28 to 0.60 and the Tg** is -8°C to 15°C; further **preferably 30°C tan $\delta$ is 0.30 to 0.55 and the Tg is** -7°C to 10°C; and **particularly preferably 30°C tan $\delta$ is 0.32 to 0.50 and the Tg is** -6°C to 5°C.

In the disclosure, unless otherwise specified, dimensions and angles of each member of the tire are measured with the tire being incorporated into the normal rim and filled with air so as to achieve the normal internal pressure. At the time of measurement, no load is applied to the tire. Besides, in the specification, the "normal rim" is a rim defined, in a standard system including a standard on which the tire is based, for each tire by the standard, and is, for example, a standard rim for JATMA, a "Design Rim" for TRA, and a "Measuring Rim" for ETRTO. In the specification, the "normal internal pressure" is an air pressure defined for each tire by the standard, and is a maximum air pressure for JATMA, a maximum value described in the table "TIRE LOAD LIMITS AT VARIOUS COLD INFLATION PRESSURES" for TRA, or "INFLATION PRESSURE" for ETRTO.

[Rubber composition for tread]

As described above, a rubber composition constituting each rubber layer of the tread (rubber composition for the tread) comprises a rubber component and a plasticizer.

<Rubber component>

The rubber composition for the tread according to the disclosure preferably comprises at least one selected from the group consisting of an isoprene-based rubber, a styrene-butadiene rubber (SBR), and a butadiene rubber (BR) as rubber components. The rubber components constituting the first layer 2 and the second layer 3 preferably comprise a SBR, more preferably comprise a SBR and a BR, or may be rubber components only consisting of a SBR and a BR. The rubber component constituting the third layer 4 preferably comprises an isoprene-based rubber, more preferably comprises an isoprene-based rubber and a BR, or may be a rubber component only consisting of an isoprene-based rubber and a BR.

(Isoprene-based rubbers)

As the isoprene-based rubbers, those common in the tire industry such as an isoprene rubber (IR), a natural rubber, and the like, for example, can be used. In the natural rubber, in addition to a non-modified natural rubber (NR), an epoxidized natural rubber (ENR), a hydrogenated natural rubber (HNR), a deproteinized natural rubber (DPNR), an ultra pure natural rubber, a modified natural rubber including a grafted natural rubber, etc., and the like are also included. These isoprene-based rubbers may be used alone or two or more thereof may be used in combination.

NRs are not particularly limited, and those commonly used in the tire industry can be used, such as SIR20, RSS#3, TSR20, and the like, for example.

A content of the isoprene-based rubber (preferably the natural rubber and more preferably the non-modified natural rubber (NR)) in 100% by mass of the rubber component when the rubber compositions constituting the first layer 2 and the second layer 3 comprise the isoprene-based rubber is, from the viewpoint of wet grip performance, preferably 50% by mass or less, more preferably 40% by mass or less, further preferably 30% by mass or less, and particularly preferably 20% by mass or less. Moreover, while a lower limit of a content of the isoprene-based rubber when the rubber composition comprises the isoprene-based rubber is not particularly limited, it may be 1% by mass or more, 3% by mass or more, 5% by mass or more, 10% by mass or more, or 15% by mass or more, for example. A content of the isoprene-based rubber in 100% by mass of the rubber component when the rubber composition constituting the third layer 4 comprises the isoprene-based rubber is not particularly limited, and it may be 10% by mass or more, 20% by mass or more, 30% by mass or more, 40% by mass or more, 50% by mass or more, or 60% by mass or more, for example.

(SBR)

The SBR is not particularly limited, and examples thereof include a solution-polymerized SBR (S-SBR), an emulsion-polymerized SBR (E-SBR), modified SBRs thereof (a modified S-SBR, a modified E-SBR), and the like. Examples of the modified SBR include a SBR modified at its terminal and/or main chain, a modified SBR coupled with tin, a silicon compound, etc. (a modified SBR of condensate or having a branched structure, etc.), and the like. Among them, an S-SBR and a modified SBR are preferable. Furthermore, hydrogenated additives of these SBRs (hydrogenated SBRs) and the like may also be used. These SBRs may be used alone or two or more thereof may be used in combination.

As the SBR, an oil-extended SBR can be used, or a non-oil-extended SBR can be used. When the oil-extended SBR is used, an oil-extended amount of SBR, that is, a content of an oil-extended oil comprised in the SBR, is preferably 10 to 50 parts by mass based on 100 parts by mass of a rubber solid content of the SBR.

The S-SBRs that can be used in the disclosure include those commercially available from JSR Corporation, Sumitomo Chemical Co., Ltd., Ube Industries, Ltd., Asahi Kasei Corporation, ZS Elastomer Co., Ltd., etc.

A styrene content of the SBR is preferably 10% by mass or more, more preferably 15% by mass or more, and further preferably 20% by mass or more, from the viewpoints of wet grip performance and abrasion resistance. Moreover, it is preferably 60% by mass or less, more preferably 55% by mass or less, and further preferably 50% by mass or less, from the viewpoints of temperature dependence of grip performance, and blow resistance. Besides, in the specification, the styrene content of the SBR is calculated by $^1$H-NMR measurement.

A vinyl content of the SBR is preferably 10 mol% or more, more preferably 15 mol% or more, and further preferably 20 mol% or more, from the viewpoints of ensuring reactivity with silica, wet grip performance, rubber strength, and abrasion resistance. Moreover, the vinyl content of the SBR is preferably 70 mol% or less, more preferably 65 mol% or less, and further preferably 60 mol% or less, from the viewpoints of preventing temperature dependence from increasing, elongation at break, and abrasion resistance. Besides, in the specification, the vinyl content (1,2-bond butadiene unit amount) of the SBR is measured by infrared absorption spectrometry.

A weight-average molecular weight (Mw) of the SBR is preferably 200,000 or more, more preferably 250,000 or more, and further preferably 300,000 or more, from the viewpoint of wet grip performance. Moreover, the weight-average molecular weight is preferably 2,000,000 or less, more preferably 1,800,000 or less, and further preferably 1,500,000 or less, from the viewpoint of cross-linking uniformity. Besides, in the specification, the weight-average molecular weight of the SBR can be determined in terms of a standard polystyrene based on measurement values obtained by a gel permeation chromatography (GPC) (for example, GPC-8000 Series, manufactured by Tosoh Corporation, Detector: differential refractometer, Column: TSKGEL SUPERMULTIPORE HZ-M, manufactured by Tosoh Corporation).

A content of the SBR in 100% by mass of the rubber component when the rubber compositions constituting the first layer 2 and the second layer 3 comprise the SBR is preferably 50% by mass or more, more preferably 60% by mass or more, further preferably 65% by mass or more, and particularly preferably 70% by mass or more, from the viewpoint of wet performance. Moreover, an upper limit of a content of the SBR in the rubber component is not particularly limited and may be 100% by mass. Besides, a content of the SBR in 100% by mass of the rubber component when the rubber composition constituting the third layer 4 comprises the SBR is not particularly limited.

(BR)

The BR is not particularly limited, and those commonly used in the tire industry can be used, such as, for example, a BR having a cis content of less than 50% by mass (a low cis BR), a BR having a cis content of 90% or more by mass (a high cis BR), a rare earth-based butadiene rubber synthesized using a rare earth element-based catalyst (a rare earth-based BR), a BR containing a syndiotactic polybutadiene crystal (an SPB-containing BR), a modified BR (a high cis modified BR, a low cis modified BR), and the like. Examples of the modified BR include a BR modified with a functional group or the like similar to that described in the SBRs above. These BRs may be used alone or two or more thereof may be used in combination.

As the high cis BR, those commercially available from Zeon Corporation, Ube Industries, Ltd., JSR Corporation, etc. can be used, for example. When a high cis BR is comprised, low temperature characteristics and abrasion resistance can be improved. The cis content is preferably 95% by mass or more, more preferably 96% by mass or more, further preferably 97% by mass or more, and particularly preferably 98% by mass or more. Besides, in the specification, the cis content (cis-1,4-bond butadiene unit amount) is a value calculated by infrared absorption spectrometry.

As the rare earth-based BR, those synthesized using a rare earth element-based catalyst and having a vinyl content of preferably 1.8 mol% or less, more preferably 1.0 mol% or less, and further preferably 0.8 mol% or less, and a cis content of preferably 95% by mass or more, more preferably 96% by mass or more, further preferably 97% by mass or more, and particularly preferably 98% by mass or more can be used. As the rare earth-based BR, those commercially available from LANXESS, etc. can be used, for example.

Examples of the SPB-containing BR include those in which a 1,2-syndiotactic polybutadiene crystal is chemically

bonded with the BR and dispersed, but not those in which the crystal is simply dispersed in the BR. As such an SPB-containing BR, those commercially available from Ube Industries, Ltd., etc., can be used.

As the modified BR, a modified butadiene rubber (modified BR) modified with a functional group comprising at least one element selected from the group consisting of silicon, nitrogen, and oxygen at its terminal and/or main chain is suitably used.

Examples of other modified BRs include those obtained by polymerizing 1,3-butadiene with a lithium initiator and then adding a tin compound and in which a modified BR molecule is bonded by a tin-carbon bond at its terminal (a tin-modified BR), and the like. Moreover, the modified BR may be hydrogenated or may not be hydrogenated.

The previously-listed BRs may be used alone or two or more thereof may be used in combination.

A weight-average molecular weight (Mw) of the BR is preferably 300,000 or more, more preferably 350,000 or more, and further preferably 400,000 or more, from the viewpoint of abrasion resistance. Moreover, it is preferably 2,000,000 or less, and more preferably 1,000,000 or less, from the viewpoint of cross-linking uniformity. Besides, the weight-average molecular weight of the BR can be determined in terms of a standard polystyrene based on measurement values obtained by a gel permeation chromatography (GPC) (for example, GPC-8000 Series, manufactured by Tosoh Corporation, Detector: differential refractometer, Column: TSKGEL SUPERMULTIPORE HZ-M, manufactured by Tosoh Corporation).

A content of the BR in 100% by mass of the rubber component when the rubber compositions constituting the first layer 2, the second layer 3, and the third layer 4 comprise the BR is preferably 50% by mass or less, more preferably 40% by mass or less, further preferably 30% by mass or less, and particularly preferably 20% by mass or less, from the viewpoint of wet grip performance. Moreover, while a lower limit of a content of the BR when the rubber composition comprises the BR is not particularly limited, it may be 1% by mass or more, 3% by mass or more, 5% by mass or more, 10% by mass or more, or 15% by mass or more, for example.

(Other rubber components)

As the rubber component according to the disclosure, rubber components other than the above-described isoprene-based rubbers, SBRs, and BRs may be contained. As other rubber components, a cross-linkable rubber component commonly used in the tire industry can be used, such as, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone or two or more thereof may be used in combination.

<Filler>

In the rubber composition for tread, according to the disclosure, a filler comprising carbon black and/or silica is suitably used. The rubber compositions constituting the first layer 2 and the second layer 3 comprise, as a filler, preferably silica and more preferably carbon black and silica. The rubber composition constituting the third layer 4 preferably comprises carbon black as a filler.

(Carbon black)

As carbon black, those common in the tire industry can be appropriately used. Examples thereof include GPF, FEF, HAF, ISAF, SAF, and the like, for example. These carbon blacks may be used alone or two or more thereof may be used in combination.

A nitrogen adsorption specific surface area ($N_2SA$) of carbon black is preferably 10 $m^2/g$ or more, more preferably 20 $m^2/g$ or more, further preferably 35 $m^2/g$ or more, and particularly preferably 50 $m^2/g$ or more, from the viewpoint of reinforcing property. Moreover, from the viewpoints of fuel efficiency and processability, it is preferably 200 $m^2/g$ or less, more preferably 150 $m^2/g$ or less, further preferably 100 $m^2/g$ or less, and further preferably 80 $m^2/g$ or less. Besides, the $N_2SA$ of carbon black is a value measured according to Japanese Industrial Standard JIS K 6217-2 "Carbon black for rubber-Fundamental characteristics-Part 2: Determination of specific surface **area-Nitrogen adsorption methods-Single-point procedures"**.

When the rubber composition comprises the carbon black, the content thereof based on 100 parts by mass of the rubber component is, from the viewpoints of abrasion resistance and wet grip performance, preferably 1 parts by mass or more, more preferably 3 parts by mass or more, and further preferably 5 parts by mass or more. Moreover, from the viewpoint of fuel efficiency, it is preferably 50 parts by mass or less, more preferably 35 parts by mass or less, further preferably 20 parts by mass or less, and particularly preferably 10 parts by mass or less.

(Silica)

Silica is not particularly limited, and those common in the tire industry can be used, such as silica prepared by a dry process (anhydrous silica), silica prepared by a wet process (hydrous silica), and the like, for example. Among them, hydrous silica prepared by a wet process is preferable because it has many silanol groups. These silicas may be used alone or two or more thereof may be used in combination.

A nitrogen adsorption specific surface area ($N_2SA$) of silica is preferably 140 $m^2/g$ or more, more preferably 150 $m^2/g$ or more, further preferably 170 $m^2/g$ or more, and particularly 200 $m^2/g$ or more, from the viewpoints of fuel efficiency and abrasion resistance. Moreover, it is preferably 350 $m^2/g$ or less, more preferably 300 $m^2/g$ or less, and further preferably 250 $m^2/g$ or less, from the viewpoints of fuel efficiency and processability. Besides, the $N_2SA$ of silica in the specification is a value measured by the BET method according to ASTM D3037-93.

A content of silica in the rubber composition based on 100 parts by mass of the rubber component when the rubber composition comprises silica is preferably 20 parts by mass or more, more preferably 40 parts by mass or more, further preferably 50 parts by mass or more, and particularly preferably 60 parts by mass or more. Moreover, the content of silica in the rubber composition based on 100 parts by mass of the rubber component when the rubber composition comprises silica is preferably 160 parts by mass or less, more preferably 130 parts by mass or less, further preferably 120 parts by mass or less, and particularly preferably 110 parts by mass or less.

When the rubber composition constituting the first layer comprises silica, a content of silica based on 100 parts by mass of the rubber component is preferably 50 parts by mass or more, more preferably 70 parts by mass or more, further preferably 90 parts by mass or more, and particularly preferably 100 parts by mass or more of silica, from the viewpoint of wet grip performance. Moreover, from the viewpoint of abrasion resistance, it is preferably 160 parts by mass or less, more preferably 130 parts by mass or less, further preferably 120 parts by mass or less, and particularly preferably 110 parts by mass or less.

When the rubber composition constituting the second layer comprises silica, a content of silica based on 100 parts by mass of the rubber component is preferably 40 parts by mass or more, more preferably 50 parts by mass or more, further preferably 60 parts by mass or more, and particularly preferably 70 parts by mass or more of silica. Moreover, from the viewpoint of abrasion resistance, it is preferably 130 parts by mass or less, more preferably 120 parts by mass or less, further preferably 110 parts by mass or less, and particularly preferably 100 parts by mass or less.

A total content of silica and carbon black based on 100 parts by mass of the rubber component is, from the viewpoint of abrasion resistance, preferably 40 parts by mass or more, more preferably 50 parts by mass or more, and further preferably 60 parts by mass or more. Moreover, from the viewpoints of fuel efficiency and elongation at break, it is preferably 160 parts by mass or less, more preferably 140 parts by mass or less, and further preferably 120 parts by mass or less.

In the rubber compositions constituting the first layer 2 and the second layer 3, based on 100 parts by mass of the rubber component, a silica content is greater than a carbon black content from the viewpoint of the balance of fuel efficiency, wet grip performance, and abrasion resistance. A proportion of silica with respect to a total content of silica and carbon black in the first layer 2 and the second layer 3 is preferably 60% by mass or more, more preferably 70% by mass or more, further preferably 80% by mass or more, further preferably 85% by mass or more, and particularly preferably 90% by mass or more. Besides, a containing percentage of silica and carbon black in the third layer 4 is not particularly limited, but a proportion of carbon black with respect to a total content of silica and carbon black may be 50% by mass or more, 70% by mass or more, 90% by mass or more, or 100% by mass or more, for example.

(Silane coupling agent)

Silica is preferably used in combination with a silane coupling agent. The silane coupling agent is not particularly limited, and any silane coupling agent conventionally used in combination with silica in the tire industry can be used, and examples thereof include, for example, a mercapto-based silane coupling agent as follows; a sulfide-based silane coupling agent such as bis(3-triethoxysilylpropyl)disulfide, bis(3-triethoxysilylpropyl)tetrasulfide, and the like; a vinyl-based silane coupling agent such as vinyltriethoxysilane, vinyltrimethoxysilane, and the like; an amino-based silane coupling agent such as 3-aminopropyltriethoxysilane, 3-aminopropyltrimethoxysilane, 3-(2-aminoethyl) aminopropyltriethoxysilane, and the like; a glycidoxy-based silane coupling agent such as γ**-glycidoxypropyltriethoxysilane**, γ-glycidoxypropyltrimethoxysilane, and the like; a nitro-based silane coupling agent such as 3-nitropropyltrimethoxysilane, 3-nitropropyltriethoxysilane, and the like; a chloro-based silane coupling agent such as 3-chloropropyltrimethoxysilane, 3-chloropropyltriethoxysilane, and the like; and the like. Among them, the sulfide-based silane coupling agent and/or the mercapto-based silane coupling agent is preferable, and the mercapto-based silane coupling agent is more preferable. These silane coupling agents may be used alone or two or more thereof may be used in combination.

The mercapto-based silane coupling agent is preferably a compound represented by the following Formula (1) and/or a compound comprising a bond unit A represented by the following Formula (2) and a bond unit B represented

by the following Formula (3):

[Chemical Formula 1]

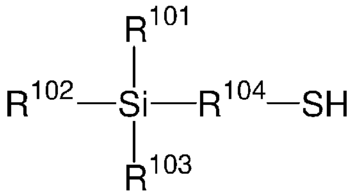

(1)

(Wherein, each of $R^{101}$, $R^{102}$, and $R^{103}$ independently represents a group represented by a $C_{1-12}$ alkyl, a $C_{1-12}$ alkoxy, or a $-O-(R^{111}-O)_z-R^{112}$ (Each of z $R^{111}$s independently represents a divalent hydrocarbon group having 1 to 30 carbon atoms; $R^{112}$ represents a $C_{1-30}$ alkyl, a $C_{2-30}$ alkenyl, a $C_{6-30}$ aryl, or a $C_{7-30}$ aralkyl; z represents an integer of 1 to 30); and $R^{104}$ represents a $C_{1-6}$ alkylene.)

[Chemical formula 2]

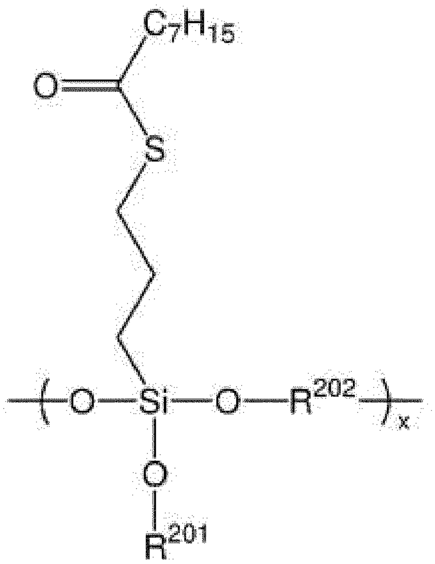

(2)

[Chemical formula 3]

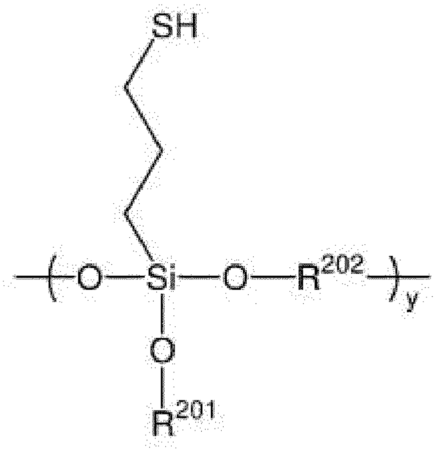

(3)

(Wherein, x represents an integer of 0 or more; y represents an integer of 1 or more; $R^{201}$ represents a hydrogen atom, or a $C_{1-30}$ alkyl, a $C_{2-30}$ alkenyl, or a $C_{2-30}$ alkynyl, which may be substituted with a halogen atom, hydroxyl or carboxyl; $R^{202}$ represents a $C_{1-30}$ alkylene, a $C_{2-30}$ alkenylene, or a $C_{2-30}$ alkynylene; wherein $R^{201}$ and $R^{202}$ may form a ring structure.)

Examples of the compound represented by Formula (1) include, for example, 3-mercaptopropyltrimethoxysilane, 3-mercaptopropyltriethoxysilane, 2-mercaptoethyltrimethoxysilane, 2-mercaptoethyltriethoxysilane, and a compound represented by Formula (4) below (Si363 manufactured by Evonik Degussa), and the compound represented by Formula (4) below can be suitably used. They may be used alone or two or more thereof may be used in combination.

[Chemical formula 4]

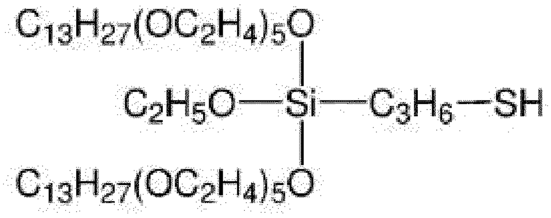

(4)

Examples of the compound comprising the bond unit A represented by Formula (2) and the bond unit B represented by Formula (3) include those manufactured by Momentive Performance Materials, and the like, for example. They may be used alone or two or more thereof may be used in combination.

When the rubber composition comprises the silane coupling agent, a total content of the silane coupling agent based on 100 parts by mass of the rubber component is, from the viewpoint of enhancing the dispersibility of silica, preferably 0.5 parts by mass or more, more preferably 1.0 parts by mass or more, further preferably 2.0 parts by mass or more, and particularly preferably 4.0 parts by mass or more. Moreover, it is preferably 20 parts by mass or less, more preferably 12 parts by mass or less, further preferably 10 parts by mass or less, and particularly preferably 9.0 parts by mass or less, from the viewpoint of preventing a decrease in abrasion resistance.

A content of the silane coupling agent (when the silane coupling agent is used in a plurality, a total content of all of the silane coupling agents) based on 100 parts by mass of silica is preferably 1.0 parts by mass or more, more preferably 3.0 parts by mass or more, and further preferably 5.0 parts by mass or more, from the viewpoint of increasing the dispersibility of silica. Moreover, it is preferably 20 parts by mass or less, more preferably 15 parts by mass or less, and further preferably 12 parts by mass or less, from the viewpoints of cost and processability.

As fillers, besides carbon black and silica, other fillers can further be used. While such fillers are not particularly limited, any one of fillers commonly used in this field, such as aluminum hydroxide, alumina (aluminum oxide), calcium carbonate, magnesium sulfate, talc, clay, and the like, for example, can be used. These fillers may be used alone or two or more thereof may be used in combination.

<Plasticizer>

The rubber composition for tread, according to the disclosure, preferably comprises a plasticizer. Examples of the plasticizer include a resin component, oil, a liquid rubber, an ester-based plasticizer, and the like, for example.

The resin component is not particularly limited, and examples thereof include a petroleum resin, a terpene-based resin, a rosin-based resin, a phenol-based resin, and the like being commonly used in the tire industry. These resin components may be used alone or two or more thereof may be used in combination.

In the specification, the "C5-based petroleum resin" refers to a resin obtained by polymerizing a C5 fraction. Examples of the C5 fraction include, for example, a petroleum fraction equivalent to 4 to 5 carbon atoms such as cyclopentadiene, pentene, pentadiene, isoprene, and the like. As the C5-based petroleum resin, a dicyclopentadiene resin (DCPD resin) is suitably used.

In the specification, the "aromatic-based petroleum resin" refers to a resin obtained by polymerizing a C9 fraction, and may be hydrogenated or modified. Examples of the C9 fraction include, for example, a petroleum fraction equivalent to 8 to 10 carbon atoms such as vinyltoluene, alkylstyrene, indene, and methyl indene. As specific examples of the aromatic-based petroleum resin, for example, a coumarone indene resin, a coumarone resin, an indene resin, and an aromatic vinyl-based resin are suitably used. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, because it is economical, easy to be processed, and good in heat generation. As the aromatic vinyl-based resin, for example, those commercially available from Kraton Corporation, Eastman Chemical Company, etc. can

be used.

In the specification, a "C5-C9-based petroleum resin" refers to a resin obtained by copolymerizing the C5 fraction and the C9 fraction, and may be hydrogenated or modified. Examples of the C5 fraction and the C9 fraction include the above-described petroleum fractions. As the C5-C9-based petroleum resin, for example, those commercially available from Tosoh Corporation, Zibo Luhua Hongjin New Material Co., Ltd., etc. can be used.

Examples of the terpene-based resin include a polyterpene resin consisting of at least one selected from terpene compounds such as α-pinene, β-pinene, limonene, dipentene, and the like; an aromatic-modified terpene resin made from the terpene compound and an aromatic compound; a terpene phenol resin made from a terpene compound and a phenol-based compound; and those obtainable by hydrogenating these terpene-based resins (hydrogenated terpene-based resins). Examples of the aromatic compound used as a raw material for the aromatic-modified terpene resin include, for **example, styrene,** α-methylstyrene, vinyltoluene, divinyltoluene, and the like. Examples of the phenol-based compound used as a raw material for the terpene phenol resin include, for example, phenol, bisphenol A, cresol, xylenol, and the like.

The rosin-based resin is not particularly limited, and examples thereof include, for example, a natural resin rosin, and a rosin modified resin being the natural resin rosin modified by hydrogenation, disproportionation, dimerization, or esterification.

The phenol-based resin is not particularly limited, and examples thereof include a phenolformaldehyde resin, an alkylphenolformaldehyde resin, an alkylphenol acetylene resin, an oil-modified phenolformaldehyde resin, and the like.

A softening point of the resin component is preferably 60°C or higher and more preferably 65°C or higher, from the viewpoint of wet grip performance. Moreover, it is preferably 150°C or lower, more preferably 140°C or lower, and further preferably 130°C or lower, from the viewpoints of processability and improvement in dispersibility of a rubber component with a filler. Besides, in the specification, the softening point can be defined as a temperature at which a sphere drops when the softening point specified in Japanese Industrial Standard JIS K 6220-1: 2001 is measured with a ring and ball softening point measuring device.

When the rubber composition comprises the resin component, the content thereof based on 100 parts by mass of the rubber component is, from the viewpoint of wet grip performance, preferably 1 parts by mass or more, more preferably 3 parts by mass or more, further preferably 5 parts by mass or more, and particularly preferably 7 parts by mass or more. Moreover, it is preferably 60 parts by mass or less, more preferably 50 parts by mass or less, further preferably 40 parts by mass or less, and particularly preferably 30 parts by mass or less, from the viewpoint of suppression of heat generation.

Examples of oil include, for example, a process oil, a vegetable oil and fat, an animal oil and fat, and the like. Examples of the process oil include a paraffin-based process oil, a naphthene-based process oil, an aromatic-based process oil, and the like. Moreover, as an environmental measure, a process oil having a low content of a polycyclic aromatic compound (PCA) can also be used. Examples of the process oil having a low content of a PCA include mild extraction solvates (MES), a treated distillate aromatic extract (TDAE), a heavy naphthenic oil, and the like.

When the rubber composition comprises the oil, the content thereof based on 100 parts by mass of the rubber component is, from the viewpoint of processability, preferably 1 parts by mass or more, more preferably 3 parts by mass or more, further preferably 5 parts by mass or more, and particularly preferably 7 parts by mass or more. Moreover, it is preferably 120 parts by mass or less, more preferably 100 parts by mass or less, further preferably 80 parts by mass or less, and particularly preferably 60 parts by mass or less from the viewpoint of abrasion resistance. Besides, in the specification, the content of oil also includes an amount of oil contained in an oil-extended rubber.

A liquid rubber is not particularly limited as long as it is a polymer in liquid state at room temperature (25°C), and examples of the liquid rubber include, for example, a liquid butadiene rubber (liquid BR), a liquid styrene-butadiene rubber (liquid SBR), a liquid isoprene rubber (liquid IR), a liquid styrene-isoprene polymer (liquid SIR), a liquid farnesene rubber, and the like. These may be used alone or two or more thereof may be used in combination.

When the rubber composition comprises the liquid rubber, the content thereof based on 100 parts by mass of the rubber component is preferably 1 parts by mass or more, more preferably 3 parts by mass or more, further preferably 5 parts by mass or more, and particularly preferably 7 parts by mass or more. Moreover, a content of the liquid rubber is preferably 50 parts by mass or less, more preferably 40 parts by mass or less, and further preferably 20 parts by mass or less.

Examples of the ester-based plasticizers include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizers may be used alone or two or more thereof may be used in combination.

In the rubber composition constituting the first layer 2, a content of the plasticizer (when the plasticizer is used in a plurality, a total content of all of the plasticizers) based on 100 parts by mass of the rubber component is preferably

10 parts by mass or more, more preferably 20 parts by mass or more, further preferably 30 parts by mass or more, and particularly preferably 40 parts by mass or more, from the viewpoint of wet grip performance. In the rubber composition constituting the second layer 3, a content of the plasticizer based on 100 parts by mass of the rubber component is preferably 5 parts by mass or more, more preferably 10 parts by mass or more, and further preferably 15 parts by mass or more. Moreover, in the rubber compositions constituting the first layer 2, the second layer 3, and the third layer 4, the content of the plasticizer based on 100 parts by mass of the rubber component is preferably 120 parts by mass or less, more preferably 100 parts by mass or less, further preferably 90 parts by mass or less, and particularly preferably 80 parts by mass or less, from the viewpoint of processability.

<The other compounding agents>

The rubber composition according to the disclosure can appropriately comprise compounding agents commonly used in the tire industry conventionally, such as, for example, wax, a processing aid, stearic acid, zinc oxide, an antioxidant, a vulcanizing agent, a vulcanization accelerator, and the like, in addition to the previously-described components.

When the rubber composition comprises wax, the content thereof based on 100 parts by mass of the rubber component is, from the viewpoint of weather resistance of a rubber, preferably 0.5 parts by mass or more, and more preferably 1 parts by mass or more. Moreover, it is preferably 10 parts by mass or less, and more preferably 5 parts by mass or less, from the viewpoint of preventing whitening of a tire due to bloom.

Examples of the processing aid include, for example, a fatty acid metal salt, fatty acid amide, an amide ester, a silica surface active agent, a fatty acid ester, a mixture of a fatty acid metal salt and an amide ester, a mixture of a fatty acid metal salt and fatty acid amide, and the like. These processing aids may be used alone or two or more thereof may be used in combination. As the processing aids, those commercially available from Schill & Seilacher, GmbH & Co., Performance Additives L.L.C., etc., for example, can be used.

When the rubber composition comprises the processing aid, the content thereof based on 100 parts by mass of the rubber component is, from the viewpoint of exhibiting the effect of improvement of processability, preferably 0.5 parts by mass or more and more preferably 1 parts by mass or more. Moreover, it is preferably 10 parts by mass or less and more preferably 8 parts by mass or less, from the viewpoints of abrasion resistance and breaking strength.

The antioxidant is not particularly limited, and examples thereof include, for example, each amine-based, quinoline-based, quinone-based, phenol-based, and imidazole-based compound, and an antioxidant such as a carbamate metal salt, preferably a phenylenediamine-based antioxidant such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and the like, and a quinoline-based antioxidant such as 2,2,4-trimethyl-1,2-dihydroquinolin polymer, 6-ethoxy-2,2,4-trimethyl-1,2-dihydroquinolin, and the like. These antioxidants may be used alone or two or more thereof may be used in combination.

When the rubber composition comprises the antioxidant, the content thereof based on 100 parts by mass of the rubber component is, from the viewpoint of ozone crack resistance of a rubber, preferably 0.5 parts by mass or more and more preferably 1 parts by mass or more. Moreover, it is preferably 10 parts by mass or less and more preferably 5 parts by mass or less, from the viewpoints of abrasion resistance and wet grip performance.

When the rubber composition comprises stearic acid, the content thereof based on 100 parts by mass of the rubber component is, from the viewpoint of processability, preferably 0.5 parts by mass or more and more preferably 1 parts by mass or more. Moreover, it is preferably 10 parts by mass or less and more preferably 5 parts by mass or less, from the viewpoint of vulcanization rate.

When the rubber composition comprises zinc oxide, the content thereof based on 100 parts by mass of the rubber component is, from the viewpoint of processability, preferably 0.5 parts by mass or more and more preferably 1 parts by mass or more. Moreover, it is preferably 10 parts by mass or less and more preferably 5 parts by mass or less, from the viewpoint of abrasion resistance.

Sulfur is suitably used as the vulcanizing agent. As sulfur, a powdered sulfur, an oil-treated sulfur, a precipitated sulfur, a colloidal sulfur, an insoluble sulfur, a highly dispersible sulfur, and the like can be used.

A content of sulfur based on 100 parts by mass of the rubber component when the rubber composition comprises sulfur as the vulcanizing agent is preferably 0.1 parts by mass or more, more preferably 0.3 parts by mass or more, and further preferably 0.5 parts by mass or more, from the viewpoint of securing a sufficient vulcanization reaction. Moreover, it is preferably 5.0 parts by mass or less, more preferably 4.0 parts by mass or less, and further preferably 3.0 parts by mass or less, from the viewpoint of preventing deterioration. Besides, a content of a vulcanizing agent when using an oil-containing sulfur as the vulcanizing agent shall be a total content of pure sulfur amounts comprised in the oil-containing sulfur.

Examples of vulcanizing agents other than sulfur include, for example, alkylphenol-sulfur chloride condensate, 1,6-hexamethylene-sodium dithiosulfate dehydrate, 1,6-bis(N,N'-dibenzylthiocarbamoyldithio)hexane, and the like. As these vulcanizing agents other than sulfur, those commercially available from Taoka Chemical Co., Ltd., LANXESS,

Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators. These vulcanization accelerators may be used alone or two or more thereof may be used in combination. Among them, one or more vulcanization accelerators selected from the group consisting of sulfenamide-based, guanidine-based, and thiazole-based vulcanization accelerators are preferable, and the sulfenamide-based vulcanization accelerator is more preferable.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-cyclohexyl-2-benzothiazolylsulfenamide (CBS) is preferable.

Examples of the guanidine-based vulcanization accelerator include, for example, 1,3-diphenylguanidine (DPG), 1,3-di-o-tolylguanidine, 1-o-tolylbiguanide, a di-o-tolylguanidine salt of dicatechol borate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

When the rubber composition comprises the vulcanization accelerator, the content thereof based on 100 parts by mass of the rubber component is preferably 1 parts by mass or more and more preferably 2 parts by mass or more. Moreover, the content of the vulcanization accelerator based on 100 parts by mass of the rubber component is preferably 8 parts by mass or less, more preferably 7 parts by mass or less, and further preferably 6 parts by mass or less. When the content of the vulcanization accelerators is within the above-described ranges, there is a tendency to be able to secure breaking strength and elongation.

The rubber composition according to the disclosure can be manufactured by a known method. For example, it can be manufactured by kneading each of the previously-described components using a rubber kneading apparatus such as an open roll, a closed type kneader (Bunbury mixer, kneader, etc.), and the like.

The kneading step comprises, for example, a base kneading step of kneading compounding agents and additives other than vulcanizing agents and vulcanization accelerators, and a final kneading (F kneading) step of adding vulcanizing agents and vulcanization accelerators to the kneaded product obtained in the base kneading step and kneading them. Furthermore, the base kneading step can be divided into a plurality of steps, if desired.

Kneading conditions are not particularly limited, and, for example, a method of kneading at a discharge temperature of 150 to 170°C for 3 to 10 minutes in the base kneading step and kneading at 70 to 110°C for 1 to 5 minutes in the final kneading step is exemplified. Vulcanizing conditions are not particularly limited, and, for example, a method of vulcanizing at 150 to 200°C for 10 to 30 minutes is exemplified.

A difference ($AE_1$-$AE_2$) between an acetone extraction amount $AE_1$ of the rubber composition constituting the first layer 2 and an acetone extraction amount $AE_2$ of the rubber composition constituting the second layer 3 is 1.0% by mass or more, preferably 1.5% by mass or more, more preferably 2.0% by mass or more, further preferably 2.5% by mass or more, and particularly preferably 3.0% by mass or more. It is considered that the difference in the acetone extraction amounts being set within the previously-mentioned range makes it easy to transfer the acetone extraction component such as an oil and the like from the first layer 2 to the second layer 3 during traveling due to the concentration gradient and makes it possible to sustain wet grip performance for a long period of time since a sufficient amount of plasticizers is comprised in the second layer 3 by the time the second layer 3 is exposed due to wear of the tread part . Moreover, while an upper limit of ($AE_1$-$AE_2$) is not particularly limited, it is generally 30% by mass or less, preferably 20% by mass or less, more preferably 15% by mass or less, and further preferably 10% by mass or less.

A difference ($AE_2$-$AE_3$) between an acetone extraction amount $AE_2$ of the rubber composition constituting the second layer 3 and an acetone extraction amount $AE_3$ of the rubber composition constituting the third layer 4 is 1.0% by mass or more, preferably 1.5% by mass or more, more preferably 2.0% by mass or more, further preferably 2.5% by mass or more, and particularly preferably 3.0% by mass or more. Moreover, while an upper limit of ($AE_2$-$AE_3$) is not particularly limited, it is generally 30% by mass or less, preferably 20% by mass or less, more preferably 15% by mass or less, and further preferably 10% by mass or less.

Besides, the acetone extraction amount is to be an indicator of the concentration of an organic low-molecular compound within a plasticizer comprised in the vulcanized rubber composition. In accordance with Japanese Industrial Standard JIS K 6229-3:2015, the acetone extraction amount can be determined using the below-described equation by soaking each of vulcanized rubber test pieces in acetone for 24 hours to extract the soluble component and measuring mass of each of the test pieces before and after extraction:

Acetone extraction amount (% by mass) = {(mass of rubber test piece before extraction-mass of rubber test piece after extraction) / (mass of rubber test piece before extraction)} × 100.

[Tire]

The tire according to the disclosure comprises a tread comprising the first layer 2, the second layer 3, and the third layer 4, and may be a pneumatic tire or a non-pneumatic tire. Moreover, examples of the pneumatic tire include a tire for a passenger car, a tire for a truck/bus, a tire for a motorcycle, a high-performance tire, and the like, and the pneumatic tire is suitably used as the tire for a passenger car in particular. Besides, the high-performance tire in the specification is a tire having a particularly good grip performance and is a concept including a racing tire used for a racing vehicle.

The tire comprising the tread comprising the first layer 2, the second layer 3, and the third layer 4 can be manufactured by a usual method using the previously-described rubber composition. In other words, the tire can be manufactured by extruding, with an extruder comprising a base having a predetermined shape, unvulcanized rubber compositions compounded with each of the above-described components based on the rubber component as necessary into shapes of the first layer 2, the second layer 3, and the third layer 4, attaching them together with other tire members on a tire molding machine, and molding them by a usual method to form an unvulcanized tire, followed by heating and pressurizing this unvulcanized tire in a vulcanizing machine.

EXAMPLE

Although the disclosure will be described based on Examples, the disclosure is not to be limited to these Examples.

Various chemicals used in Examples and Comparative examples are shown below:

NR: TSR20
SBR: Tufdene 4850 (non-modified S-SBR, styrene content: 40% by mass, vinyl content: 46 mol%, Mw: 350,000, comprises 50 parts by mass of an oil content based on 100 parts by mass of a rubber solid content), manufactured by Asahi Kasei Corporation
BR: UBEPOL BR (registered trademark) 150B (vinyl content: 1.5 mol%, cis content: 97% by mass, Mw: 440,000), manufactured by Ube Industries, Ltd.
Carbon black: Show Black N330 ($N_2SA$: 75 $m^2/g$), manufactured by Cabot Japan K.K.
Silica: Ultrasil VN3 ($N_2SA$: 175 $m^2/g$, average primary particle size: 15 nm), manufactured by Evonik Degussa
Silane coupling agent: NXT-Z45 (mercapto-based silane coupling agent), manufactured by Momentive Performance Materials
Resin component: PetroTac 100V (C5-C9-based petroleum resin, softening point: 96°C, Mw: 3,800, SP value: 8.3), manufactured by Tosoh Corporation
Liquid rubber: Ricon 100 (liquid SBR), manufactured by Clay Valley Co., Ltd.
Oil: Vivatec 500 (TDAE oil), manufactured by H&R Group
Antioxidant: Antigen 6C (N-(1,3-dimethylbutyl)-N'-phenyl-p-phenylenediamine), manufactured by Sumitomo Chemical Co., Ltd.
Wax: Sunnock N, manufactured by Ouchi Shinko Chemical Industrial Co., Ltd.
Stearic acid: Bead stearic acid "Tsubaki", manufactured by NOF CORPORATION
Zinc oxide: Zinc oxide No. 2, manufactured by Mitsui Mining & Smelting Co., Ltd.
Sulfur: Powdered sulfur, manufactured by Karuizawa Iou Kabushiki Kaisha
Vulcanization accelerator: Nocceler CZ (N-cyclohexyl-2-benzothiazolylsulfenamide), manufactured by Ouchi Shinko Chemical Industrial Co., Ltd.

(Examples and Comparative examples)

According to the compounding formulations shown in Table 1, using a 1.7 L closed Banbury mixer, all chemicals other than sulfur and the vulcanization accelerator were kneaded for 1 to 10 minutes until a discharge temperature reached 150 to 160°C to obtain a kneaded product. Next, using a twin-screw open roll, sulfur and the vulcanization accelerator were added to the obtained kneaded product, and the mixture was kneaded for 4 minutes until the temperature

reached 105°C to obtain an unvulcanized rubber composition. The obtained unvulcanized rubber composition was extruded into shapes of first, second, and third layers of a tread and attached together with other tire members to produce an unvulcanized tire, followed by vulcanization at 170°C to obtain each of test tires shown in Table 2 (size: 205/65R15, rim: 15 × 6JJ, internal pressure: 230 kPa).

<Measurement of acetone extraction amount (AE amount) of first layer, second layer, and third layer>

Each of vulcanized rubber test pieces were soaked in acetone for 24 hours to extract the soluble component. Mass of each of the vulcanized rubber test pieces before and after extraction was measured and the acetone extraction amount was determined by the following calculation equation.

Acetone extraction amount (% by mass) = {(Mass of rubber test piece before extraction-mass of rubber test piece after extraction) / (Mass of rubber test piece before extraction)} × 100.

Besides, for each of the rubber test pieces of the first layer, the second layer, and the third layer, what was cut out from the rubber layer interior of the tread part of each of the test tires was used. Values of the difference ($AE_1$-$AE_2$) between the acetone extraction amount $AE_1$ of the rubber composition constituting the first layer and the acetone extraction amount $AE_2$ of the rubber composition constituting the second layer and the difference ($AE_2$-$AE_3$) between the acetone extraction amount $AE_2$ of the rubber composition constituting the second layer and the acetone extraction amount $AE_3$ of the rubber composition constituting the third layer are shown in Table 2.

**<Loss tangent tan δ and complex modulus E*** measurements>

For each of rubber test pieces produced by cutting out for length 20 mm × width 4 mm × thickness 1 mm from the rubber layer interior of the tread part of each of the test tires such that the tire circumferential direction is a long side, using a dynamic viscoelasticity measurement apparatus EPLEXOR (registered trademark) series, manufactured by GABO Qualimeter **Testanlagen GmbH), loss tangent tan δ was measured under conditions of** temperatures 0°C and 30°C, frequency 10 Hz, and elongation strain 2.5%. Moreover, complex modulus E* was measured under conditions of temperature 0°C, frequency 10 Hz, and elongation strain 2.5%. Besides, the thickness direction of the sample was set to be the tire radial direction.

<Measurement of glass transition temperature (Tg)>

For each of rubber test pieces produced by cutting out for length 20 mm × width 4 mm × thickness 1 mm from the rubber layer interior of the tread part of each of the test tires such that the tire circumferential direction is a long side, using EPLEXOR series, manufactured by GABO Qualimeter **Testanlagen GmbH), the temperature distribution curve of loss tangent tan** δ was measured under conditions of frequency 10 Hz and elongation strain 2.5%, **and the temperature (tan δ peak temperature) corresponding to the greatest tan δ value in the obtained temperature distribution curve was set to be the** glass transition temperature (Tg). Besides, the thickness direction of the sample was set to be the tire radial direction.

<Tensile test>

Dumbbell No. 7 test pieces of 1mm in thickness, which Dumbbell No. 7 test pieces were cut out from the rubber layer interior of the tread part of each of the test tires such that the tire circumferential direction is the tensile direction, were produced, a tensile test was carried out under conditions of atmospheric temperature 23°C and tensile speed 3.3 mm/second according to **Japanese Industrial Standard JIS K 6251; 2017 "Vulcanized rubber and** thermoplastic rubber-**Determination of tensile test properties" and Elongation** at break EB (%) was measured. Besides, the thickness direction of the sample was set to be the tire radial direction.

<Wet grip maintenance performance>

Each of the test tires was mounted to all wheels of a (2000 cc domestic FF) vehicle, and the braking distance was measured from the point at which brakes were applied when traveling at a speed of 100 km/h on a wet asphalt road

surface. Moreover, the previously-mentioned tire was thermally deteriorated at 80°C for 7 days, and then each of the test tires with the tread part being worn along the tread radius such that the thickness of the tread part is brought to be 50% of the thickness of the tire being newly used was mounted to all wheels of the previously-mentioned vehicle, and the braking distance was measured from the point at which brakes were applied when traveling at a speed of 100 km/h on a wet asphalt road surface. Then, for each of the test tires, a wet grip performance maintenance index before and after wear was calculated by the following calculation equations, the wet grip performance maintenance index was converted with the maintenance index of a reference tire (Comparative example 6) being set to 100, and wet grip maintenance performance for each of the test tires was obtained. It indicates that the higher the numerical value, the smaller the change in wet grip performance before and after wear, so that wet grip performance when the tire is newly used is maintained.

(Wet grip performance maintenance index of reference tire) = (Braking distance of reference tire when it is newly used) / (Braking distance after wear of reference tire)

(Wet grip performance maintenance index of each of test tires) = (Braking distance of each of test tires when it is newly used) / (Braking distance after wear of each of test tires)

(Wet grip maintenance performance of each of test tires) = (Wet grip performance maintenance index of each of test tires) / (Wet grip performance maintenance index of reference tire) x 100

<Fuel efficiency>

Using a rolling resistance testing machine, rolling resistance was measured with each of the test tires being made to run under conditions of rim 15 × 6JJ; internal pressure 230 kPa; load 3.43 kN; and speed 80 km/h. With rolling resistance of the reference tire (Comparative example 6) being set to 100, rolling resistance was expressed as an index value using the below-described calculation equation. It indicates that the larger the numerical value, the better the fuel efficiency.

(Fuel efficiency index) = (Rolling resistance of reference tire when it is newly used) / (Rolling resistance of each of test tires when it is newly used) x 100

For an overall performance of wet grip maintenance performance and fuel efficiency (the total sum of wet grip maintenance performance index and fuel efficiency index), over 200 is set to be a target performance value.

Table 1

| | First layer compoundinq | | | | Second layer compoundinq | | | | Third layer compounding | | |
|---|---|---|---|---|---|---|---|---|---|---|---|
| | A1 | A2 | A3 | A4 | B1 | B2 | B3 | B4 | C1 | C2 | C3 |
| Compounding amount (part by mass | | | | | | | | | | | |
| NR | - | - | - | - | - | - | - | - | 60 | 60 | 60 |
| SBR | 80 | 90 | 90 | 90 | 70 | 70 | 65 | 70 | - | - | - |

(continued)

| | First layer compoundinq | | | | Second layer compoundinq | | | | Third layer compounding | | |
|---|---|---|---|---|---|---|---|---|---|---|---|
| | A1 | A2 | A3 | A4 | B1 | B2 | B3 | B4 | C1 | C2 | C3 |
| Compounding amount (part by mass | | | | | | | | | | | |
| BR | 20 | 10 | 10 | 10 | 30 | 30 | 35 | 30 | 40 | 40 | 40 |
| Carbon black | 10 | 10 | 5.0 | 10 | 5.0 | 5.0 | 5.0 | 5.0 | 50 | 30 | 35 |
| Silica | 90 | 100 | 110 | 95 | 80 | 70 | 60 | 85 | 20 | 20 | - |
| Silane coupling agent | 7.2 | 8.0 | 8.8 | 7.6 | 6.4 | 5.6 | 4.4 | 6.8 | 1.6 | 1.6 | - |
| Resin component | 20 | 30 | 50 | 25 | 15 | 12 | 10 | 25 | - | - | - |
| Liquid rubber | 15 | 15 | 15 | 15 | - | - | - | - | - | - | - |
| Oil | 10 | 10 | 10 | 10 | 10 | 5.0 | 2.0 | 10 | 50 | 15 | 10 |
| Antioxidant | 2.0 | 2.0 | 2.0 | 2.0 | 2.0 | 2.0 | 2.0 | 2.0 | 2.0 | 2.0 | 2.0 |
| Wax | 2.0 | 2.0 | 2.0 | 2.0 | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 | 2.0 | 2.0 | 2.0 | 2.0 |
| Zinc oxide | 2.5 | 2.5 | 2.5 | 2.5 | 2.5 | 2.5 | 2.5 | 2.5 | 3.5 | 3.5 | 3.5 |
| Sulfur | 1.5 | 1.5 | 1.5 | 1.5 | 1.7 | 1.7 | 1.7 | 1.7 | 1.8 | 1.8 | 2.0 |
| Vulcanization accelerator | 2.0 | 2.0 | 2.0 | 2.0 | 2.0 | 2.0 | 2.0 | 2.0 | 2.0 | 2.0 | 2.0 |
| Physical property | | | | | | | | | | | |
| Acetone extraction amount (% by mass) | 21.0 | 23.0 | 28.0 | 22.0 | 20.3 | 18.0 | 16.0 | 20.8 | 20.5 | 15.0 | 12.0 |
| 0°C tan δ | 1.13 | 1.22 | 1.55 | 1.16 | 0.75 | 0.68 | 0.65 | 1.04 | 0.30 | 0.18 | 0.15 |
| 30°C tan δ | 0.32 | 0.35 | 0.46 | 0.33 | 0.25 | 0.21 | 0.17 | 0.29 | 0.26 | 0.12 | 0.08 |
| 0°CE * (MPa) | 55 | 65 | 75 | 60 | 45 | 38 | 31 | 52 | 18 | 12 | 8 |
| Tg (°C) | -5 | -2 | 5 | -4 | -12 | -15 | -18 | -8 | -68 | -70 | -72 |
| EB (%) | 630 | 650 | 670 | 640 | 560 | 550 | 520 | 610 | 480 | 450 | 420 |

Table 2

| | Comparative example | | | | | | Example | | | | | | |
|---|---|---|---|---|---|---|---|---|---|---|---|---|---|
| | 1 | 2 | 3 | 4 | 5 | 6 | 1 | 2 | 3 | 4 | 5 | 6 | 7 |
| First layer compounding | A1 | A1 | A1 | A1 | A1 | A1 | A1 | A2 | A1 | A3 | A2 | A4 | A1 |
| Second layer compounding | - | B1 | B2 | B1 | B1 | B2 | B2 | B2 | B3 | B1 | B4 | B4 | B3 |
| Third layer compounding | - | - | - | C1 | C2 | C1 | C2 | C2 | C3 | C2 | C2 | C2 | C2 |
| $AE_1$ - $AE_2$ (% by mass) | - | 0.7 | 3.0 | 0.7 | 0.7 | 3.0 | 3.0 | 5.0 | 5.0 | 7.7 | 2.2 | 1.2 | 5.0 |
| $AE_2$ - $AE_3$ (% by mass) | - | - | - | -0.2 | 5.3 | -2.5 | 3.0 | 3.0 | 3.0 | 5.3 | 5.8 | 5.8 | 1.0 |
| t1 (mm) | 9.0 | 3.0 | 3.0 | 3.0 | 3.0 | 3.0 | 3.0 | 3.0 | 4.0 | 3.0 | 3.0 | 3.0 | 3.0 |
| t2 (mm) | - | 7.0 | 7.0 | 4.0 | 4.0 | 4.0 | 4.0 | 4.0 | 4.0 | 4.0 | 4.0 | 4.0 | 4.0 |
| t3 (mm) | - | - | - | 2.0 | 2.0 | 2.0 | 2.0 | 2.0 | 2.0 | 2.0 | 2.0 | 2.0 | 2.0 |
| Index | | | | | | | | | | | | | |
| Wet grip maintenance performance | 103 | 100 | 107 | 93 | 98 | 100 | 107 | 104 | 104 | 106 | 107 | 108 | 103 |
| Fuel efficiency | 79 | 92 | 89 | 100 | 100 | 100 | 105 | 112 | 112 | 103 | 109 | 111 | 116 |
| Overall performance | 182 | 192 | 196 | 193 | 198 | 200 | 212 | 216 | 216 | 209 | 216 | 219 | 219 |

Based on the results of Tables 1 and 2, it is evident that, with a tire of the disclosure, wherein a tread part is

provided with three or more rubber layers, and at least a predetermined level of gradient in compounding amount of a plasticizer is imparted toward a rubber layer on the outer side in the tire radial direction from a rubber layer on the outer side in the tire radial direction, there is an improvement in the overall performance of wet grip maintenance performance and fuel efficiency.

REFERENCE SIGNS LIST

1 Tread surface
2 First layer
3 Second layer
4 Third layer

## Claims

**1.** A tire having a tread at least comprising a first layer constituting a tread surface, a second layer being arranged adjacent on the inner side of the first layer in the radial direction, and a third layer being arranged adjacent on the inner side of the second layer in the radial direction,

wherein the first layer, the second layer, and the third layer are composed of a rubber composition comprising a rubber component and a plasticizer,
wherein a difference ($AE_1$-$AE_2$) between an acetone extraction amount $AE_1$ of the rubber composition constituting the first layer and an acetone extraction amount $AE_2$ of the rubber composition constituting the second layer is 1.0% by mass or more, and
wherein a difference ($AE_2$-$AE_3$) between an acetone extraction amount $AE_2$ of the rubber composition constituting the second layer and an acetone extraction amount $AE_3$ of the rubber composition constituting the third layer is 1.0% by mass or more.

**2.** The tire of claim 1, wherein $AE_1$-$AE_2$ is 2.0% by mass or more.

**3.** The tire of claim 1 or 2, wherein $AE_2$-$AE_3$ is 2.0% by mass or more.

**4.** The tire of any one of claims 1 to 3, wherein tan $\delta$ at 0°C of the rubber composition constituting the first layer is 1.00 or more.

**5.** The tire of any one of claims 1 to 4, wherein elongation at break measured according to JIS K 6251 of the rubber composition constituting the first layer is 610% or more.

**6.** The tire of any one of claims 1 to 5, wherein complex modulus at 0°C (0°C E*) of the rubber composition constituting the first layer is 50 MPa or more.

**7.** The tire of any one of claims 1 to 6, wherein the glass transition temperature of the rubber composition constituting the first layer is -10°C or higher.

**8.** The tire of any one of claims 1 to 7, wherein the glass transition temperature of the rubber composition constituting the first layer is -7°C or higher.

**9.** The tire of any one of claims 1 to 8, wherein tan $\delta$ at 30°C of the rubber composition constituting the first layer is 0.25 or more.

**10.** The tire of any one of claims 1 to 9, wherein tan $\delta$ at 30°C of the rubber composition constituting the first layer is 0.30 or more.

**11.** The tire of any one of claims 1 to 10, wherein tan $\delta$ at 0°C of the rubber composition constituting the second layer is 0.60 or more.

**12.** The tire of any one of claims 1 to 11, wherein elongation at break measured according to JIS K 6251 of the rubber composition constituting the second layer is 500% or more.

**13.** The tire of any one of claims 1 to 12, wherein complex modulus at 0°C (0°C E*) of the rubber composition constituting the second layer is 25 MPa or more.

**14.** The tire of any one of claims 1 to 13, wherein each of the rubber compositions constituting the first layer and the second layer comprise 40 to 160 parts by mass of silica and carbon black in total, based on 100 parts by mass of the rubber component, and a proportion of a content of silica with respect to a total content of silica and carbon black is 60% by mass or more.

**15.** The tire of any one of claims 1 to 14, wherein the rubber composition constituting the first layer comprises 100 parts by mass or more of silica based on 100 parts by mass of the rubber component.

**16.** The tire of any one of claims 1 to 15, wherein each of the rubber compositions constituting the first layer and the second layer comprise 10 parts by mass or more of a plasticizer based on 100 parts by mass of the rubber component.

**17.** The tire of any one of claims 1 to 16, wherein each of the rubber components constituting the first layer and the second layer comprises 50% by mass of a styrene-butadiene rubber.

**18.** The tire of any one of claims 1 to 17, wherein a tire inner cavity is provided with at least one selected from the group consisting of a sealant, a noise-damping body, and an electronic component for tire monitoring.

FIG. 1

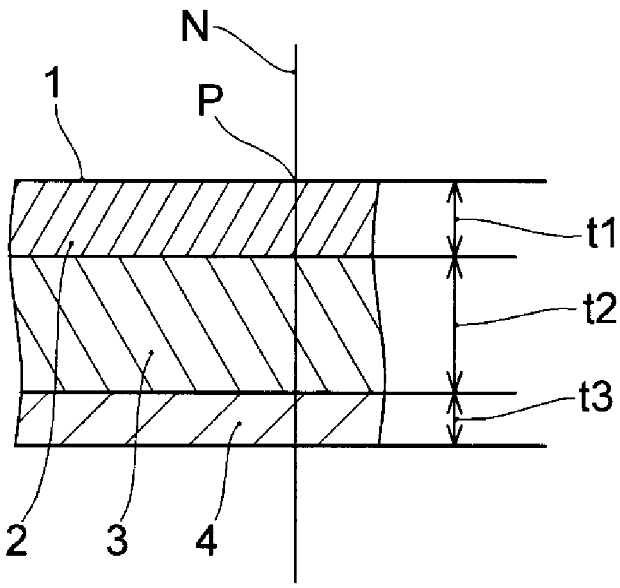

**INTERNATIONAL SEARCH REPORT**

International application No. PCT/JP2021/017908

A. CLASSIFICATION OF SUBJECT MATTER
Int.Cl. B60C11/00(2006.01)i, B60C1/00(2006.01)i, C08L15/00(2006.01)i
FI: B60C11/00D, B60C11/00B, B60C1/00A, C08L15/00

According to International Patent Classification (IPC) or to both national classification and IPC

B. FIELDS SEARCHED

Minimum documentation searched (classification system followed by classification symbols)
Int.Cl. B60C1/00-19/12, C08L15/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2015/001942 A1 (SUMITOMO RUBBER INDUSTRIES, LTD.) 08 January 2015 (2015-01-08), claims, paragraphs [0001]-[0007], [0019]-[0092], [0127]-[0186], fig. 1(a) | 1-3, 16, 17<br>5, 12, 18 |
| X<br>Y | WO 2019/187005 A1 (COMPAGNIE GENERALE DES ETABLISSEMENTS MICHELIN) 03 October 2019 (2019-10-03), claims, paragraphs [0001]-[0027], [0113]-[0129] | 1-3, 14-16<br>5, 12, 18 |
| X<br>Y | JP 8-258503 A (THE GOODYEAR TIRE AND RUBBER COMPANY) 08 October 1996 (1996-10-08), claims, paragraphs [0001]-[0009], [0040]-[0090], [0109]-[0130], fig. 1-3 | 1-3, 16<br>5, 12, 18 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 June 2021 | 06 July 2021 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.
PCT/JP2021/017908

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2015-502286 A (COMPAGNIE GENERALE DES ETABLISSEMENTS MICHELIN) 22 January 2015 (2015-01-22), claims, paragraphs [0016]-[0018], [0025]-[0032], fig. 2 | 5, 12 |
| Y | JP 2017-71277 A (THE YOKOHAMA RUBBER CO., LTD.) 13 April 2017 (2017-04-13), paragraphs [0005]-[0007], [0090]-[0143], fig. 1, 2, 8 | 5, 12 |
| Y | CN 107323180 A (TAICANG LUNDA AUTOMOBILE FITTING CO., LTD.) 07 November 2017 (2017-11-07), claims, paragraph [0023] | 18 |
| A | JP 2-303905 A (TOYO TIRE & RUBBER CO., LTD.) 17 December 1990 (1990-12-17), entire text | 1-18 |
| A | JP 2002-19416 A (THE YOKOHAMA RUBBER CO., LTD.) 23 January 2002 (2002-01-23), entire text | 1-18 |
| A | JP 2-147410 A (SUMITOMO RUBBER INDUSTRIES, LTD.) 06 June 1990 (1990-06-06), entire text | 1-18 |
| A | JP 6-8708 A (BRIDGESTONE CORPORATION) 18 January 1994 (1994-01-18), entire text | 1-18 |
| A | JP 2005-67236 A (SUMITOMO RUBBER INDUSTRIES, LTD.) 17 March 2005 (2005-03-17), entire text | 1-18 |
| A | US 2017/0327617 A1 (COMPAGNIE GENERALE DES ETABLISSEMENTS MICHELIN) 16 November 2017 (2017-11-16), entire text | 1-18 |

Form PCT/ISA/210 (second sheet) (January 2015)

**INTERNATIONAL SEARCH REPORT**
Information on patent family members

International application No.
PCT/JP2021/017908

| | | |
|---|---|---|
| WO 2015/001942 A1 | 08 January 2015 | US 2016/0368324 A1<br>claims, paragraphs [0001]-[0007], [0028]-[0112], [0151]-[0233], fig. 1(a)<br>EP 3012118 A1<br>CN 105324252 A |
| WO 2019/187005 A1 | 03 October 2019 | (Family: none) |
| JP 8-258503 A | 08 October 1996 | US 6044882 A<br>claims, column 1, line 6 to column 2, line 9, column 5, line 29 to column 12, line 3, column 14, line 25 to column 16, line 64, fig. 1-3<br>EP 732229 A1<br>BR 9600885 A<br>CA 2160323 A<br>CN 1137981 A<br>KR 10-1996-0033724 A |
| JP 2015-502286 A | 22 January 2015 | US 2014/0332132 A1<br>claims, paragraphs [0051]-[0057], [0095]-[0120], fig. 2<br>WO 2013/079336 A1<br>EP 2785534 A1<br>FR 2983122 A1<br>CN 103958217 A<br>RU 2014126072 A<br>BR 112014012661 A |
| JP 2017-71277 A | 13 April 2017 | US 2018/0281523 A1<br>paragraphs [0006]-[0011], [0119]-[0177], fig. 1, 2, 8<br>WO 2017/061490 A1<br>CA 3001105 A<br>AU 2016334763 A<br>CN 108136843 A |
| CN 107323180 A | 07 November 2017 | (Family: none) |
| JP 2-303905 A | 17 December 1990 | (Family: none) |
| JP 2002-19416 A | 23 January 2002 | (Family: none) |
| JP 2-147410 A | 06 June 1990 | (Family: none) |

Form PCT/ISA/210 (patent family annex) (January 2015)

**INTERNATIONAL SEARCH REPORT**
Information on patent family members

International application No.
PCT/JP2021/017908

| | | |
|---|---|---|
| JP 6-8708 A | 18 January 1994 | EP 576130 A1<br>AU 3833593 A<br>CA 2099103 A1 |
| JP 2005-67236 A | 17 March 2005 | (Family: none) |
| US 2017/0327617 A1 | 16 November 2017 | WO 2016/087248 A1<br>EP 3227106 A1<br>FR 3029139 A1<br>CN 107000395 A<br>BR 112017010810 A |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014162242 A
- JP 2020023152 A
- JP 2019142503 A